# EUROPÄISCHE PATENTANMELDUNG

(11) **EP 2 151 397 A1**
(43) Veröffentlichungstag der Anmeldung: **10.02.2010**
(21) Anmeldenummer: 09009336.0
(22) Anmeldetag: 17.07.2009
(51) Int. Cl.: B65D 33/16, B65B 51/04, A22C 11/12

(54) **Verschlussklammer**

(30) Priorität: 05.08.2008 DE 202008010807 U
(71) Anmelder: Tipper Tie technopack GmbH, 21509 Glinde (DE)
(72) Erfinder: Bogun, Thomas, 23879 Mölln / Lauenburg (DE)
(74) Vertreter: Glawe, Delfs, Moll

(57) **Zusammenfassung**

Die Erfindung bezieht sich auf Verschließvorrichtungen für schlauchförmige Verpackungen und zugehörige Verschlussklammern derselben. Die Verschlussklammern bestehen aus U-förmigen Materialabschnitten mit einer Profilbreite und einer Außenprofilierung (2). Die Verschließvorrichtung weist einen Stempel (6) und einen Clipkanal (3a, 3b) zur Führung des Stempels (6) und der Verschlussklammern auf. Dadurch dass der Clipkanal (3a, 3b) breiter als die Profilbreite der Verschlussklammern ist, können Verschlussklammern mit verschiedenen Profilbreiten ohne Wechsel des Clipkanals (3a, 3b) in der Verschließvorrichtung verarbeitet werden.

## Beschreibung

Die Erfindung betrifft eine Anordnung aus einer Verschließvorrichtung für schlauchförmige Verpackungen und einer Verschlussklammer nach dem Oberbegriff des Patentanspruchs 1 sowie einen Satz von Verschlussklammern für schlauchförmige Verpackungen nach dem Oberbegriff des Patentanspruchs 5.

Gattungsgemäße Anordnungen werden vornehmlich in der Wurstproduktion eingesetzt, wo es darum geht, den mit Brät gefüllten Darm mit der Verschlussklammer ("Clip") zu verschließen. Das Ende des Darms wird dabei auf einen kleinen Umfang gerafft, so dass ihn die Beine der Verschlussklammer umgreifen können. Ein Stempel schiebt die Verschlussklammer mit den Beinen voran auf den Darm zu. Zur Führung von Verschlussklammer und Stempel dient dabei ein Clipkanal, der zumindest die Klammerbeine und die schmalen Stempellängsseiten umfasst, um ein seitliches Ausbrechen zu verhindern (z. B. EP 0 030 755 A1). Sobald die Beine den gerafften Darmabschnitt umgriffen haben, stoßen sie auf eine Matrize, auf der sie durch die anhaltende Stempelkraft um den Darm herum gebogen werden, so dass ein fester Clipverschluss entsteht.

Bereits seit längerer Zeit besteht von Seiten der Anwender der Wunsch, möglichst viele verschiedene Produkte mit derselben Anordnung verschließen zu können. So ist es bekannt, für verschiedene Produkte unterschiedliche Verschlussklammern vorzusehen und die Antriebe von Verschließvorrichtungen auf die Art und die Verformbarkeit des jeweiligen Klammertriebs hin einzustellen (z.B. EP 0 935 421 A1). Wird allerdings mit verschieden großen Verschlussklammern gearbeitet, muss die Verschließvorrichtung auf das unterschiedliche Format eingestellt werden. Insbesondere ist es erforderlich, den Clipkanal auszutauschen, wenn zu einem Klammertyp mit breiterem oder schmalerem Profil gewechselt wird, um eine sichere Führung zu gewährleisten. Für solche Fälle ist bereits vorgeschlagen worden, ein Warnsignal zu erzeugen, wenn der neue Klammertyp einen Wechsel von Verschließwerkzeugen erfordert (EP 1 746 030 B1). Das Problem, den Clipkanal von Hand austauschen zu müssen, besteht jedoch fort.

Die Erfindung möchte dieses Problem lösen, also einen Austausch des Clipkanals bei Wechsel zu einem Klammertyp anderer Profilbreite überflüssig machen. Sie löst diese Aufgabe durch die Merkmale der Patentansprüche 1 und 5. Die Unteransprüche betreffen weitere Verbesserungen der Erfindung.

Eine erfindungsgemäße Verschlussklammer ist aus einem vereinzelten, U-förmigen Materialabschnitt gebildet. U-förmig bedeutet dabei, dass die Verschlussklammer einen Klammerrücken und zwei davon abstehende Klammerbeine aufweist. Vereinzelt heißt, dass die Verschlussklammer nicht mit anderen Verschlussklammern materialeinstückig zusammenhängt. Über die Beine verbundene Verschlussklammern (z. B. Fig. 2 der DE 2 606 658 A1) sind also ausgeschlossen, über einen gesonderten Materialstreifen verbundene Verschlussklammern (z. B. DE 32 44 979 C2). hingegen inbegriffen. Der Materialabschnitt kann aus Kunststoff oder Metall oder auch verschienen Komponenten bestehen.

Erfindungsgemäße Verschlussklammern besitzen ein Profil, das sich im Wesentlichen, d. h. abgesehen von etwaigen einzelnen Ausnehmungen (wie z. B. die Kerben 12 in der DE 90 00 936.3 U1), Vorsprüngen oder Verjüngungen (wie z. B. in Fig. 1 bis 4 der EP 0 951 427 B1) entlang des Materialabschnitts, einheitlich über den gesamten Materialstreifen erstreckt. Die Profilbreite ist die größte Ausdehnung des Profils senkrecht zu der von dem Klammerrücken und den Klammerbeinen aufgespannten Klammerebene. Bei exakt kreisförmigem Profil ist die Profilbreite also der Durchmesser des kreisförmigen Querschnitts.

Die erfindungsgemäßen Verschlussklammern verfügen darüber hinaus über eine Außenprofilierung. Diese Außenprofilierung befindet sich an den Außenseiten der Verschlussklammer angeordnet, auf den voneinander abgewandten Seiten der Klammerbeine. An den Klammerbeinen ist die Außenprofilierung im Wesentlichen durchgehend, d. h. bis auf etwaige einzelne Ausnehmungen oder kurze Verjüngungen verläuft sie einheitlich entlang der Klammerbeine. Sofern sich die Außenprofilierung auch am Klammerrücken befindet, gilt dies auch für diesen Bereich. Die Außenprofilierung kann aus einem oder mehreren Vorsprüngen und/oder einer oder mehrerer Vertiefungen bestehen. Entscheidend ist, dass sie Führungsflächen oder -kanten enthält, die ein seitliches Ausbrechen der Verschlussklammer aus dem Clipkanal verhindern können. Bevorzugt sind Führungsflächen, die um nicht mehr als 20° gegenüber der Klammerebene geneigt sind, weiter bevorzugt sind Führungsflächen parallel zur Klammerebene. Die Außenprofilierung verläuft parallel zur Klammerebene, so dass eine Bewegung der Verschlussklammer in der Klammerebene mit einer Parallelverschiebung der Außenprofilierung einhergeht.

Ein Stempel ist ein mit einer Antriebskraft beaufschlagtes Bauteil der Vorrichtung, das dafür ausgelegt ist, die Verschlussklammer anzuschieben und auf einer Matrize zu verbiegen. Meist handelt es sich um eine längliche Metallplatte, deren Breite der der Verschlussklammer entspricht. Ein Clipkanal ist eine im Wesentlichen, d. h. abgesehen von etwaigen Durchbrüchen, durchgehende, längliche Einfassung, in der die Verschlussklammer und der Stempel jeweils mit etwas Spiel linear geführt werden. Sie muss nicht die Verschlussklammer bzw. den Stempel in der auf die Bewegungsrichtung senkrechten Ebene vollständig umschließen. Jedoch muss sie jeweils an den Klammerbeinen, und sei es auch nur im Bereich der erfindungsgemäßen Außenprofilierung, und Kanten des Stempels abgesehen von etwas Spiel anliegen und ein seitliches Ausbrechen aus der linearen Führung verhindern.

Damit die Führung auch für Verschlussklammern mit Außenprofil möglich ist, verfügt der Clipkanal über ein kongruentes Führungsprofil. Darin kann das Außenprofil mit etwas Spiel gleiten, wenn sich die Verschlussklammer im Clipkanal bewegt. Sofern dieser Zweck erfüllt ist, muss die Kongruenz nicht durchgehend sein. So sind insbesondere Ausnehmungen für Arretierelemente o. dgl. denkbar, die das Führungsprofil über kurze Abschnitte unterbrechen. Die Breite des Clipkanals ist durch die maximale Profilbreite definiert, die eine im Clipkanal geführt Verschlussklammer haben kann.

Aus fertigungstechnischen Gründen besteht die Außenprofilierung der Verschlussklammer vorzugsweise aus einem Vorsprung in der Klammerebene. Verschlussklammern mit einer solchen Außenprofilierung und auch Clipkanäle mit kongruentem Führungsprofil sind an sich bekannt (DE 90 00 936.3 U1). Jedoch ist bei diesen vorbekannten Anordnungen der Clipkanal insgesamt ebenso breit ausgeführt wie die Profilbreite der Verschlussklammer. Solche Clipkanäle sind zur Führung verschiedener Verschlussklammern mit unterschiedlichen Profilabmessungen ungeeignet.

Die Erfindung beruht demgegenüber auf der Erkenntnis, dass das kongruente Führungsprofil des Clipkanals genügt, um die Verschlussklammer entlang ihrer Außenprofilierung linear und sicher zu führen. Darauf aufbauend sieht sie einen Clipkanal vor, der breiter als die Profilbreite der Verschlussklammer ist. Damit ist der Clipkanal geeignet, verschiedenartige Verschlussklammern mit unterschiedlichen Profilabmessungen, aber gleicher Außenprofilierung, zu führen. Ein Austausch des Clipkanals ist dann nicht mehr erforderlich, solange die Breite des Clipkanals die Profilbreiten der verschiedenen Verschlussklammern übersteigt oder ihr zumindest gleichkommt. Die Erfindung besteht demgemäß auch in einem Satz der bereits beschriebenen Verschlussklammern, die unterschiedliche Profilstärken, aber die gleiche Außenprofilierung aufweisen. Ein Austausch des Clipkanals ist beim Wechsel zu einem anderen Klammertyp des erfindungsgemäßen Satzes nicht mehr nötig.

Gleiche Außenprofilierung bedeutet dabei, dass jede der Außenprofilierungen zu einem bestimmten Führungsprofil eines Clipkanals kongruent ist, d. h. abgesehen von etwas Spiel sicher linear geführt werden kann. Vorzugsweise hat jede der Außenprofilierungen die gleiche Struktur einschließlich der Abmessungen.

Bei einem erfindungsgemäßen Satz von Verschlussklammern können sich Klammern in ihren Profilstärken unterscheiden.

Mit Profilstärke ist dabei die Querschnittsfläche gemeint. Unterschiedliche Profilstärken liegen auch dann vor, wenn sie sich nur in Abschnitten der Verschlussklammern unterscheiden, z. B. weil ein Verschlussklammertyp eine stärkere Verjüngung an den Klammerbeinen aufweist als andere Verschlussklammern. Die Erfindung kommt aber besonders zum Tragen, wenn sich die jeweils größten Querschnittsflächen wenigstens zweier, vorzugsweise aller, Verschlussklammertypen voneinander unterscheiden. Die Profilstärke kann auf die jeweilige Anwendung angepasst sein, während die einheitliche Außenprofilierung gewährleistet, dass eine Führung aller Verschlussklammern des Satzes ohne Austausch des Clipkanals möglich ist.

Die Profilstärke kann insbesondere dadurch variieren, dass die Profiltiefe unterschiedlicher Verschlussklammern verschieden ist. Die Variation der Profiltiefe ist insofern günstiger als die der Profilbreite, als hierdurch das für die Festigkeit des Verschlusses wichtige Biegemoment der Verschlussklammer stärker beeinflusst wird. Sollen allerdings die verschiedenen Verschlussklammern von demselben Clipkanal geführt werden können, ist eine Vergrößerung der Profiltiefe nur zu Lasten der Größe der von den Klammerbeinen umschlossenen Klammeröffnung möglich. Damit die Klammerbeine aber den gerafften Darmabschnitt sicher umfassen können, kann die Klammeröffnung nicht beliebig verkleinert werden. Die Variation der Profiltiefe ist also nur in gewissen Grenzen möglich. Es ist somit vorteilhaft, wenn statt oder neben der Profiltiefe die Profilbreite der Verschlussklammern des erfindungsgemäßen Satzes variiert.

Vorteilhafterweise weist der Clipkanal außerhalb des Führungsprofils keine seitlichen Begrenzungen auf. Dann können beliebig breite Verschlussklammern eingesetzt werden.

Weiter ist es vorteilhaft, wenn der Stempel der Verschließvorrichtung die gleiche Außenprofilierung wie die Verschlussklammer aufweist. Er kann dann durch dasselbe Führungsprofil des Clipkanals wie die Verschlussklammern geführt werden.

Überdies ist es vorteilhaft, wenn der Stempel der Verschließvorrichtung an seiner Stirnfläche ein zur Außenprofilierung der Verschlussklammer am Klammerrücken kongruentes Stirnprofil aufweist. Hierdurch wird die Führung stabilisiert, was insbesondere in der Phase des Zusammenbiegens der Klammer auf der Matrize, während derer die Klammerbeine nach und nach die Stempelführung verlassen, zum Tragen kommt. Sofern die Verschlussklammer am Rücken eine oder mehrere Ausnehmungen in der Außenprofilierung aufweist, ist es sinnvoll, dass das Stirnprofil des Stempels auch insoweit kongruent, also mit entsprechenden Vorsprüngen versehen ist. Dies verhindert ein ungewolltes Verdrehen oder Verschieben in der Klammerebene, insbesondere in der Phase des Zusammenbiegens.

Ausführungsbeispiele der Erfindung werden nun anhand von Zeichnungen erläutert. Es zeigen:

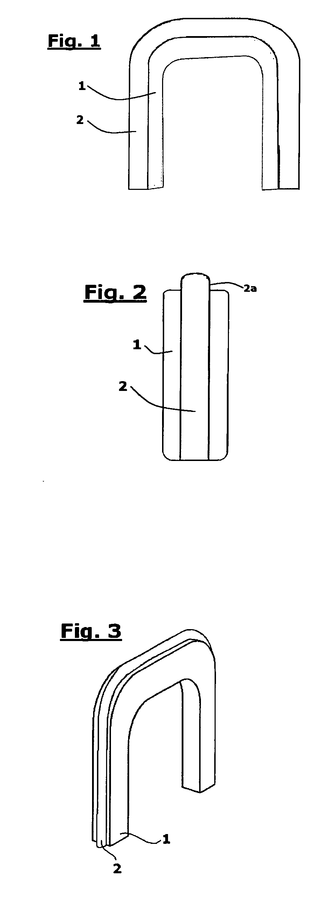

- Fig. 1: eine Seitenansicht einer erfindungsgemäßen Verschlussklammer von einer Breitseite;
- Fig. 2: die Verschlussklammer aus Fig. 1 in Seitenansicht von einer Schmalseite;
- Fig. 3: dieselbe Verschlussklammer in perspektivischer Ansicht;
- Fig. 4: dieselbe Verschlussklammer in Draufsicht in einem in Querschnittsansicht dargestellten Clipkanal einer erfindungsgemäßen Verschließvorrichtung;
- Fig. 5: eine Verschlussklammer mit breiterem Profil in dem Clipkanal aus Fig. 4;
- Fig. 6: die Verschlussklammer aus Fig. 2 in derselben Ansicht mit einem Stempel einer erfindungsgemäßen Verschließvorrichtung in Querschnittsansicht.

Die Verschlussklammer besteht aus einem U-förmig gebogenen Materialstreifen, der parallel zu seiner Haupterstreckungsrichtung in ein Verschlussprofil 1 und eine Außenprofilierung 2 unterteilt ist. Das Verschlussprofil ist an die jeweilige Anwendung angepasst, also so geformt, dass sich für die Bedingungen, insbesondere den Darmtyp und den Fülldruck, für die die Verschlussklammer bestimmt ist, ein möglichst fester Verschluss ergibt.

Die Außenprofilierung 2 hingegen ist kongruent zum durch Längsnuten gebildeten Führungsprofil 5a, 5b des Clipkanals 3a, 3b geformt. Da dies eine sichere Führung gewährleistet, kann die Verschlussklammer im Bereich des Verschlussprofils 1 schmaler ausgeführt sein als die übrigen Wandungen 4a, 4b des Clipkanals 3a, 3b. Die Außenprofilierung 2 weist eine zur Klammerebene parallele Führungsfläche 2a auf, was eine sichere Führung besonders begünstigt.

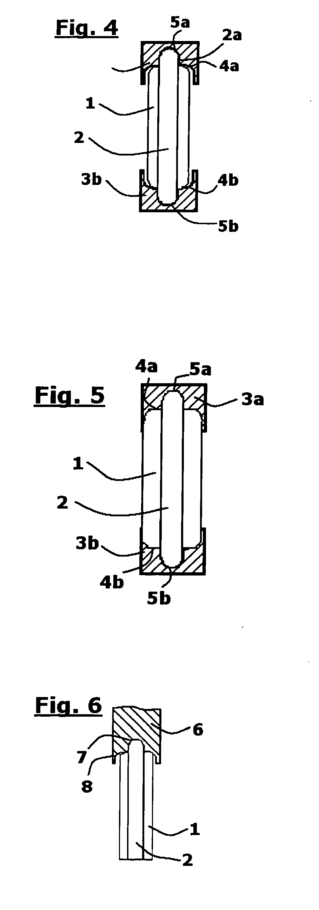

Wie Fig. 5 zeigt, kann derselbe Clipkanal 3a, 3b auch eine Verschlussklammer mit identischer Außenprofilierung 2, aber breiterem Verschlussprofil 1 aufnehmen, also Klammern, die einen festeren Verschluss bilden können. Die gezeigte formschlüssige Einfassung der Verschlussklammer über ihre gesamte Profilbreite ist an sich bekannt, so dass derartige Anordnungen als solche nicht zur Erfindung gehören. Neu und zur Erfindung gehörig sind jedoch Anordnungen aus Verschlussklammer mit geringerer Profilbreite (Fig. 4) und auch Sätze von Verschlussklammern unterschiedlicher Profilbreite und gleicher Außenprofilierung.

Fig. 6 zeigt, wie das klammerseitige Ende eines Stempels 6 die Außenprofilierung 2 auf dem Rücken einer Verschlussklammer dadurch umfasst, dass an der Stirnfläche des Stempels 6 ein zur Außenprofilierung 2 kongruentes Stirnprofil 7 angeordnet ist. Damit ist es nicht mehr erforderlich, dass der Stempel 6 mit der übrigen Stirnfläche 8 an der Verschlussklammer anliegt. Derselbe Stempel 6 kann also mit Hilfe seines Stirnprofils 7 Verschlussklammern mit verschiedenen Verschlussprofilen 1 sicher erfassen.

## Patentansprüche

1. Anordnung aus einer Verschließvorrichtung für schlauchförmige Verpackungen und einer Verschlussklammer, wobei die Verschlussklammer aus einem vereinzelten, U-förmigen Materialabschnitt mit einem Profil (1) mit einer Profilbreite gebildet ist und eine Außenprofilierung (2) aufweist, die parallel zur Klammerebene verläuft, die Vorrichtung einen Stempel (6) und einen Clipkanal (3a, 3b) zur linearen Führung des Stempels (6) und der Verschlussklammer umfasst, wobei der Clipkanal (3a, 3b) ein zur Außenprofilierung (2) der Verschlussklammer kongruentes Führungsprofil (5a, 5b) aufweist **dadurch gekennzeichnet, dass** der Clipkanal (3a, 3b) breiter als die Profilbreite der Verschlussklammer ist.

2. Anordnung nach Patentanspruch 1, **dadurch gekennzeichnet, dass** der Clipkanal (3a, 3b) außerhalb des Führungsprofils (5a, 5b) keine seitlichen Begrenzungen aufweist.

3. Anordnung nach Patentanspruch 1 oder 2, **dadurch gekennzeichnet, dass** der Stempel (6) die gleiche Außenprofilierung (2) wie die Verschlussklammer aufweist.

4. Anordnung nach einem der vorstehenden Patentansprüche, **dadurch gekennzeichnet, dass** der Stempel (6) an seiner Stirnfläche (8) ein zur Außenprofilierung (2) der Verschlussklammer am Klammerrücken kongruentes Stirnprofil (7) aufweist.

5. Satz von Verschlussklammern für schlauchförmige Verpackungen, die jeweils aus einem vereinzelten, U-förmigen Materialabschnitt mit einem Profil (1) gebildet sind, wobei sich die Profilstärken von wenigstens zwei Verschlussklammern voneinander unterscheiden, **dadurch gekennzeichnet, dass** die Verschlussklammern Außenprofilierungen (2) aufweisen, die parallel zum Materialabschnitt verlaufen und auch für Verschlussklammern unterschiedlicher Profilstärken gleich sind.

6. Satz von Verschlussklammern für schlauchförmige Verpackungen nach Anspruch 5, **dadurch gekennzeichnet, dass** die sich die Profilbreiten von wenigstens zwei Verschlussklammern voneinander unterscheiden.

7. Satz von Verschlussklammern für schlauchförmige Verpackungen nach Anspruch 5 oder 6, **dadurch gekennzeichnet, dass** die sich die Profiltiefen von wenigstens zwei Verschlussklammern voneinander unterscheiden.
